# EUROPÄISCHE PATENTSCHRIFT

(11) **EP 0 757 594 B1**
(45) Veröffentlichungstag und Bekanntmachung des Hinweises auf die Patenterteilung: **05.12.2001**
(21) Anmeldenummer: 96904821.4
(22) Anmeldetag: 20.02.1996
(51) Int. Cl.: B05B 15/12, B01D 47/02

(54) **WÄSCHER, INSBESONDERE FÜR FARBAUFTRAGEINRICHTUNGEN**
WASHER, IN PARTICULAR FOR SPRAY-PAINTING INSTALLATIONS
LAVEUR, NOTAMMENT POUR INSTALLATIONS DE PEINTURE AU PISTOLET

(30) Priorität: 21.02.1995 DE 19505803; 30.03.1995 DE 19511676
(43) Veröffentlichungstag der Anmeldung: 12.02.1997
(73) Patentinhaber: Dürr Systems GmbH, 70435 Stuttgart (DE)
(72) Erfinder: BHATNAGAR, Satpal, D-71665 Vaihingen (DE); TOBISCH, Wolfgang, D-70193 Stuttgart (DE)
(74) Vertreter: Beck, Jürgen, Dr. Dipl.-Phys.
(86) Internationale Anmeldenummer: EP9600690
(87) Internationale Veröffentlichungsnummer: WO9626014

(56) Entgegenhaltungen:
- DE-A- 2 458 612
- DE-C- 3 809 850
- GB-A- 2 217 225
- US-A- 5 100 442
- US-A- 5 286 268

## Beschreibung

Die Erfindung betrifft einen Wäscher, insbesondere für Farbauftrageinrichtungen, zum Auswaschen von festen und/oder flüssigen Stoffen aus einem Gasstrom mittels einer Waschflüssigkeit, umfassend eine von dem Gasstrom und der Waschflüssigkeit durchsetzte Waschdüse mit einer Einlaßöffnung, durch welche der Gasstrom und die Waschflüssigkeit in die Waschdüse eintreten, mit einer ersten Umlenkwand, welche den Gasstrom und die Waschflüssigkeit stromabwärts der Einlaßöffnung schräg zur Vertikalen in eine erste Richtung umlenkt, mit einer zweiten Umlenkwand, welche den Gasstrom und die Waschflüssigkeit anschließend in eine zweite, in einem Winkel zur ersten Richtung verlaufende Richtung umlenkt, mit einer Düsenöffnung, durch welche der Gasstrom und die Waschflüssigkeit hindurchtreten, wobei die Waschflüssigkeit verdüst wird und sich ein vermischter Gas-/Waschflüssigkeitsstrom bildet, und mit einer stromaufwärts der Düsenöffnung in der Waschdüse angeordneten Schallkammer, welche eine der Düsenöffnung zugewandte Öffnung aufweist.

Ein derartiger Wäscher ist beispielsweise aus der US 5,286,268 bekannt.

Bei dieser Lösung ist vorgesehen, daß an zwei Stellen ein Verdüsen und Zerstäuben der Waschflüssigkeit zum Auswaschen von festen und/oder flüssigen Stoffen in dem Gasstrom erfolgt, nämlich unmittelbar nach dem Eintritt der Waschflüssigkeit in die Waschdüse und im Bereich der Düsenöffnung.

Mit dieser Lösung wird zwar eine Geräuschreduzierung gegenüber herkömmlichen Wäschern erreicht, andererseits hat die Lösung den Nachteil, daß sich in dieser, insbesondere an den Umlenkwänden Ablagerungen der auszuwaschenden Stoffe bilden.

Der Erfindung liegt daher die Aufgabe zugrunde, einen Wäscher der gattungsgemäßen Art derart zu verbessern, daß bei gleichbleibender oder besserer Geräuschminderung eine Verschmutzung der Waschdüse im wesentlichen weitgehend verhindert wird.

Diese Aufgabe wird erfindungsgemäß durch einen Wäscher gemäß Anspruch 1 gelöst.

Der Vorteil der erfindungsgemäßen Lösung ist somit darin zu sehen, daß durch die Führungswände eine Verdüsung der Waschflüssigkeit unmittelbar nach der Einlaßöffnung, wie dies bei der US-PS 5,286,268 der Fall ist, unterbleibt und somit die Waschflüssigkeit als Waschflüssigkeitsfilm sowohl in die Eintrittsöffnung eintritt, als auch durch diese hindurch auf der ersten und/oder zweiten Umlenkwand einen Waschflüssigkeitsfilm bildet.

Damit werden die aus der US-PS 5,286,268 bekannten Probleme vermieden, denn eine Auswaschung der festen und/oder flüssigen Stoffe aus dem Gasstrom durch Verdüsung oder Zerstäubung der Waschflüssigkeit findet somit erst im Bereich nach den Umlenkwänden, vorzugsweise erst im Bereich der Düsenöffnung statt, so daß sich zwangsläufig keine Ablagerungen dieser Stoffe in der Düse bilden können, da diese Stoffe in der Düse bis zur Düsenöffnung von dem Gasstrom mitgeführt werden. Weiterhin besteht der Vorteil, daß die im Vorwäscher zur Zerstäubung benötigte Energie hier bei gleichem Gesamtdruckverlust der Zerstäubung in der Düse zugute kommt.

Die Führungswände der Waschdüse sind so ausgebildet, daß sich von der Einlaßöffnung bis zur Düsenöffnung beiderseits des Gasstroms ein sämtliche Führungswände im wesentlichen benetzender Waschflüssigkeitsfilm ausbildet. Durch den die Führungswände durchgehend benetzenden Waschflüssigkeitsfilm ist sichergestellt, daß sich keinerlei Ablagerungen der von dem Gasstrom mitgeführten Stoffe an den Führungswänden festsetzen, da diese jeweils vom Waschflüssigkeitsfilm mitgenommen werden.

Um auch nach der Öffnung der Schallkammer den Waschflüssigkeitsfilm auf den Führungswänden aufrecht zu erhalten, ist vorgesehen, daß der Waschflüssigkeitsfilm auf der die Öffnung aufweisenden Führungswand bis zur Öffnung hin verläuft, die Öffnung der Schallkammer mit einem Waschflüssigkeitsvorhang überdeckt und sich im Anschluß daran der Waschflüssigkeitsfilm auf der Führungswand wieder fortsetzt.

Vorzugsweise sind dabei die Führungswände so ausgebildet, daß sie einen auf die Einlaßöffnung folgenden und sich parallel zur ersten Richtung erstreckenden ersten Führungsabschnitt bilden, welcher den Gasstrom und die Waschflüssigkeit parallel zur ersten Richtung führt.

Ferner ist günstigerweise vorgesehen, daß sich an den ersten Führungsabschnitt ein Umlenkabschnitt anschließt, welcher den Gasstrom und die Waschflüssigkeit zur zweiten Richtung hin umlenkt und an diesen Umlenkabschnitt schließt sich dann vorzugsweise ein von den Führungswänden gebildeter zweiter Führungsabschnitt an, welcher den Gasstrom und die Waschflüssigkeit parallel zur zweiten Richtung und schließlich zur Düsenöffnung führt.

Der Vorteil dieser Führungsabschnitte ist darin zu sehen, daß sowohl die Waschflüssigkeit als auch der Gasstrom möglichst gleichmäßig und ohne Wirbelbildung und somit zerstäubungsfrei von Waschflüssigkeit geführt werden.

Ferner ist ein weiterer Vorteil der Führungsabschnitte darin zu sehen, daß diese eine Schallausbreitung ausgehend von der Düsenöffnung gerichtet führen und somit die Möglichkeit schaffen, den Schall mit definierter Ausbreitungsrichtung in die Schallkammer eintreten zu lassen und somit den aus der Einlaßöffnung austretenden Schall so weit wie möglich zu reduzieren.

Vorzugsweise sind die Führungsabschnitte und der Umlenkabschnitt so dimensioniert, daß der freie Querschnitt in derselben Größenordnung, vorzugsweise ungefähr gleich groß ist.

Vorzugsweise schließt die erste Richtung mit der Vertikalen einen Winkel < 60° ein, da sich dadurch sicherstellen läßt, daß in dem ersten Führungsabschnitt die Führungswände durch den Waschflüssigkeitsfilm vollständig überdeckt sind, ohne daß dieser abreißt.

Ferner ist vorzugsweise vorgesehen, daß auch die zweite Richtung einen Winkel < 60° mit der vertikalen einschließt, um auch diesbezüglich sicherzustellen, daß der Flüssigkeitsfilm an den Führungswänden im zweiten Führungsabschnitt nicht abreißt.

Beispielsweise ist vorgesehen, daß die erste Richtung und die zweite Richtung jeweils einen Winkel von 45° mit der Vertikalen einschließen und dabei die erste und die zweite Richtung ihrerseits wiederum einen Winkel in der Größenordnung von 60° bis 120° insbesondere ungefähr 90° miteinander einschließen.

Um eine besonders hohe Geräuschdämmung zu erreichen, ist es vorteilhaft, wenn der erste Führungsabschnitt den Gasstrom und die Waschflüssigkeit parallel zur ersten Richtung soweit führt, daß der Umlenkabschnitt bezogen auf eine Vertikale seitlich versetzt gegenüber der Einlaßöffnung und unter dieser liegt, so daß sich Einlaßöffnung und Umlenkabschnitt bei Projektion in senkrechter Richtung nicht mehr überlappen.

Noch vorteilhafter ist es, wenn der Umlenkabschnitt um mindestens eine halbe Breite der Einlaßöffnung gegenüber dieser seitlich versetzt ist, so daß zwischen der Einlaßöffnung und dem Umlenkabschnitt in vertikaler Projektion ein Zwischenraum verbleibt, welcher ungefähr der halben Breite der Einlaßöffnung entspricht. Durch diesen seitlichen Versatz wird eine ausreichende Länge des ersten Führungsabschnitts erreicht, welche die Einlaßöffnung hinsichtlich der Schallausbreitung von der Düsenöffnung entkoppelt.

Besonders vorteilhaft ist es, wenn die Düsenöffnung im wesentlichen vertikal unterhalb der Einlaßöffnung liegt, so daß auch der zweite Führungsabschnitt zusätzlich zum ersten eine ausreichende Länge aufweist und somit insgesamt durch den ersten Führungsabschnitt, den Umlenkabschnitt und den ausreichend langen zweiten Führungsabschnitt eine möglichst gute Entkopplung zwischen der Düsenöffnung und der Einlaßöffnung hinsichtlich der Schallausbreitung von der Düsenöffnung zur Einlaßöffnung gegeben ist.

Zur Bildung des Umlenkabschnitts ist vorzugsweise vorgesehen, daß die eine Führungswand im Bereich des Umlenkabschnitts einerseits eine Tangente parallel zur ersten Richtung aufweist, sich dann davon ausgehend kontinuierlich wölbt bis sie eine Tangente parallel zur zweiten Richtung aufweist.

Vorzugsweise ist bei einer vorteilhaften Ausführungsform vorgesehen, daß die Öffnung der Schallkammer auf einer Bogenaußenseite des Umlenkabschnitts angeordnet ist, und damit eine günstige Lage relativ zur Düsenöffnung aufweist, um die gewünschte Geräuschminderung zu erreichen.

Bei einem weiteren, eine noch bessere Geräuschdämmung aufweisenden Ausführungsbeispiel ist vorgesehen, daß zwischen der Einlaßöffnung und dem ersten Führungsabschnitt eine Öffnung einer weiteren Schallkammer angeordnet ist.

Vorzugsweise ist die Öffnung der weiteren Schallkammer der Öffnung der Schallkammer gegenüberliegend angeordnet, wobei zwischen diesen der erste Führungsabschnitt liegt.

Bei der die Öffnung der weiteren Schallkammer aufweisenden Führungswand ist dabei ebenfalls vorgesehen, daß diese Führungswand mit einem bis zu der Öffnung reichenden Flüssigkeitsfilm überdeckt ist, daß die Öffnung durch einen Waschflüssigkeitsvorhang überdeckt ist und daß sich im Anschluß an die Öffnung der Waschflüssigkeitsfilm auf der Führungswand und diese im wesentlichen vollständig überdeckend wieder fortsetzt.

Im Rahmen der bisherigen Beschreibung der einzelnen Ausführungsbeispiele wurde nicht im einzelnen auf die spezielle Ausbildung der Führungswände eingegangen. So sieht ein vorteilhaftes Ausführungsbeispiel vor, daß die Führungswände eine auf einer Oberseite der Waschdüse die Waschflüssigkeit in die Einlaßöffnung zerstäubungsfrei einleitenden Einleitbereich aufweisen.

Dieser Einleitbereich ist vorzugsweise so ausgebildet, daß er sich unmittelbar an den seitlich der Waschdüse verlaufenden Ablaufboden anschließt und in Form einer Wölbung in die Einlaßöffnung hineinverläuft.

Bei einer Führungswand führt der Einleitbereich den Waschflüssigkeitsfilm zu der von dieser Führungswand umfaßten ersten Umlenkfläche. Bei der die erste Umlenkfläche nicht umfassenden Führungswand ist vorgesehen, daß diese eine sich an die Einlaßöffnung anschließende Leitwand aufweist, welche mit der ersten Umlenkwand zusammen den Gasstrom und die Waschflüssigkeit auf einander gegenüberliegenden Seiten im ersten Führungsabschnitt führt.

Ferner ist es bei dieser Art der Ausbildung der Führungswand vorteilhaft, wenn diese die Öffnung der Schallkammer im Anschluß an die Leitwand aufweist. Vorzugsweise liegt dabei die Öffnung der Schallkammer zwischen der Leitwand und der zweiten Umlenkwand.

Ferner ist vorzugsweise vorgesehen, daß die Führungswände im Bereich des zweiten Führungsabschnitts den Gasstrom und die Waschflüssigkeit auf gegenüberliegenden Seiten führende Düsenendwände aufweisen, welche eine symmetrisch zur zweiten Richtung verlaufende Führung für den Gasstrom und die Waschflüssigkeit bilden.

Ferner ist bei der die erste Umlenkwand aufweisenden Führungswand vorgesehen, daß diese zwischen dem Einleitbereich und der ersten Umlenkwand die Öffnung für die weitere Schallkammer aufweist.

Hinsichtlich der Ausbildung der Schallkammern wurden im Zusammenhang mit der bisherigen Erläuterung der einzelnen Ausführungsbeispiele keine weiteren Angaben gemacht.

So sieht ein vorteilhaftes Ausführungsbeispiel vor, daß die Schallkammer sich seitlich des Gasstroms und der diesen seitlich einschließenden Waschflüssigkeit erstreckt.

Vorzugsweise ist jede Schallkammer so ausgebildet, daß sie einen unmittelbar sich an den von Waschflüssigkeit eingeschlossenen Gasstrom anschließenden freien Raum aufweist, welcher bereits zur Schalldämpfung führt.

Noch vorteilhafter ist ein Ausführungsbeispiel der Schallkammer bei welchem sich an diese eine Dämpfungskammer anschließt.

Die Dämpfungskammer ist vorzugsweise mit schalldämpfenden Elementen ausgestattet.

Im einfachsten Fall ist die Dämpfungskammer mit einem schalldämpfenden Material, beispielsweise einem Fasermaterial gefüllt.

Besonders vorteilhaft ist es, wenn zwischen der Schallkammer und der Dämpfungskammer eine schalldämpfende aber schalldurchlässige Wand angeordnet ist, wobei die schalldämpfende Wand vorzugsweise Öffnungen aufweist, durch welche der Schall von der Schallkammer hindurch in die Dämpfungskammer bereits aber gedämpft übertritt.

Eine räumlich besonders günstige Lösung sieht vor, daß sich die Schallkammer ausgehend von ihrer jeweiligen Öffnung in Richtung des Einleitbereichs der jeweiligen Führungswand erstreckt.

Besonders zweckmäßig ist es dabei, wenn unter dem Einleitbereich der jeweiligen Führungswand die Dämpfungskammer angeordnet ist, welche sich an die jeweilige Schallkammer anschließt.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: einen Schnitt durch eine Farbauftrageinrichtung mit einem ersten Ausführungsbeispiel eines erfindungsgemäßen Wäschers;

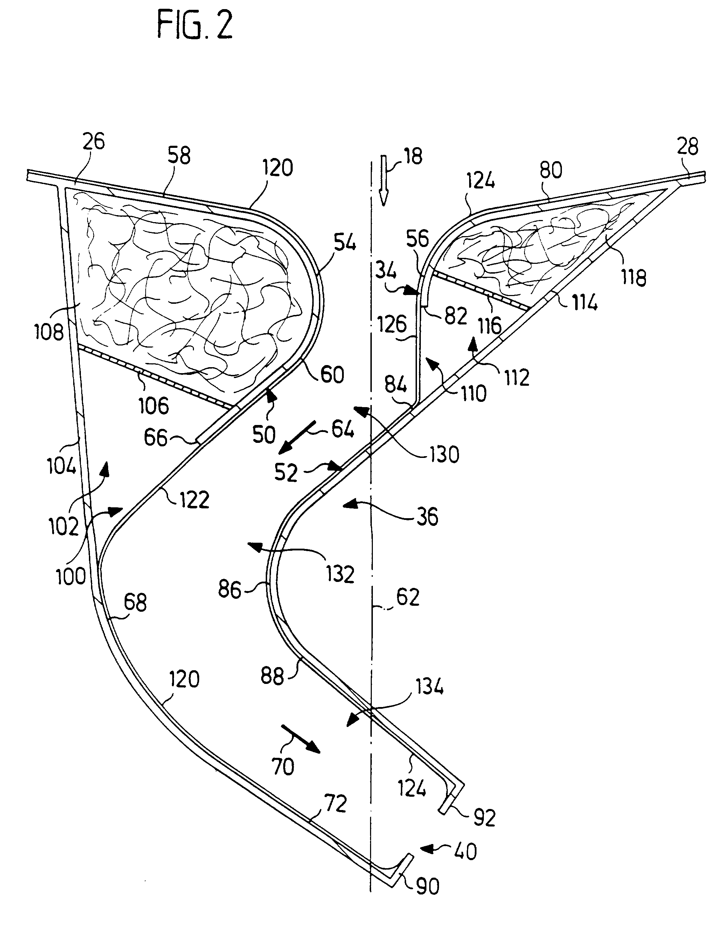

- Fig. 2: eine vergrößerte Darstellung der Waschdüse des Wäschers und
- Fig. 3: eine vergrößerte Darstellung ähnlich Fig. 2 einer der Waschdüse eines zweiten Ausführungsbeispiels des erfindungsgemäßen Wäschers.

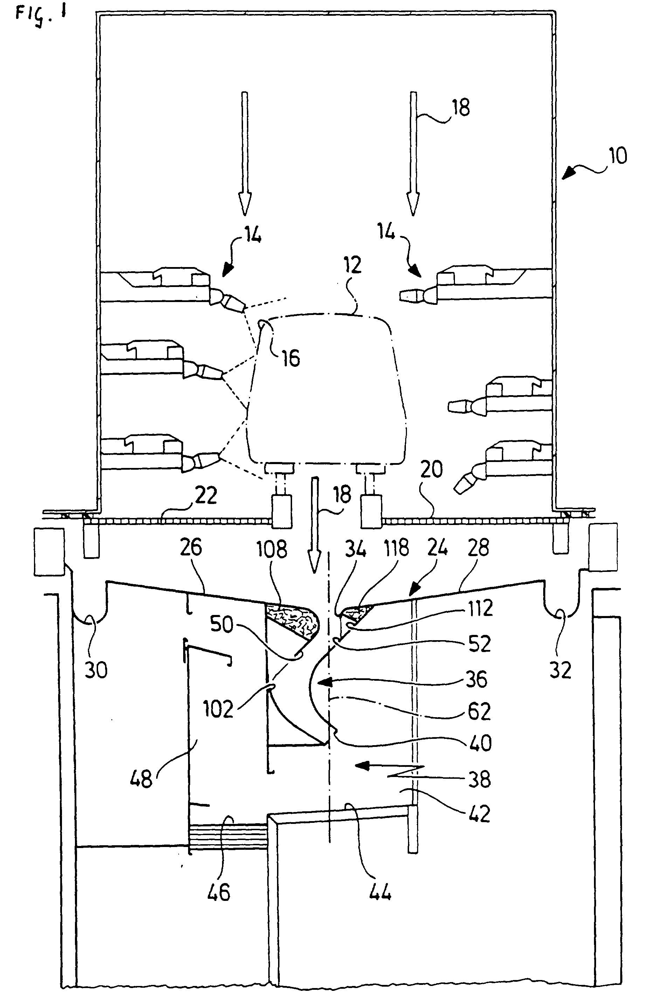

Ein als Ganzes in Fig. 1 dargestelltes Ausführungsbeispiel einer Farbauftrageinrichtung umfaßt eine als Ganzes mit 10 bezeichnete Farbauftragkabine, in welcher ein Gegenstand 12, beispielsweise eine Kraftfahrzeugkarosserie, durch Farbauftrageinrichtungen 14, beispielsweise Farbauftragroboter, mit einer Farbschicht 16 versehen wird. Die Farbauftragkabine 10 wird dabei von einem Luftstrom 18 durchsetzt, welcher deckenseitig der Farbauftragkabine 10 in diese eintritt und durch einen Boden 20 derselben austritt, welcher vorzugsweise durch Gitterroste 22 gebildet ist. Dieser Luftstrom 18 führt dabei den gesamten Lackoverspray der Farbauftragroboter 14 mit sich und trifft unterhalb des Bodens 20 auf eine als Ganzes mit 24 bezeichnete Sammelwanne, welche Ablaufböden 26, 28 umfaßt, die sich jeweils von einer außenliegenden Zulaufrinne 30 bzw. 32 für Waschflüssigkeit ausgehend zu einer Einlaßöffnung 34 einer Waschdüse 36 eines als Ganzes mit 38 bezeichneten Wäschers erstrecken.

Die Waschdüse 36 weist dabei eine in eine Entspannungskammer 42 des Wäschers 38 mündende Düsenöffnung 40 auf, wobei sich die Entspannungskammer 42 unterhalb und seitlich der Waschdüse 36 erstreckt.

Ferner ist die Entspannungskammer 42 mit einem Ablaufboden 44 versehen, welcher schräg abfallend zu einem neben der Entspannungskammer 42 liegenden Sammelkanal 46 führt, der seinerseits unterhalb einer Tropfenabscheiderkammer 48 angeordnet ist.

Der Luftstrom 18 und die über die Zulaufrinnen 30 und 32 zugeführte Waschflüssigkeit werden bei dem erfindungsgemäßen Wäscher 38 durch die Waschdüse 36 hindurchgeführt, wobei ein Auswaschen von Stoffen aus dem Luftstrom 18 im Bereich nach der Düsenöffnung 40 durch die verdüste und mit dem Luftstrom 18 in die Entspannungskammer 42 eintretende Waschflüssigkeit erfolgt.

Die Waschflüssigkeit sammelt sich auf dem Ablaufboden 44 und die noch im entspannten Luftstrom enthaltenen Tropfen der Waschflüssigkeit werden in der nachfolgenden Tropfenabscheiderkammer 48 abgeschieden.

Die Waschdüse 36 erstreckt sich mit ihrer Einlaßöffnung 34 im wesentlichen über die gesamte Ausdehnung der Farbauftragkabine 10 in deren Längsrichtung, das heißt in Förderrichtung des mit Farbe zu versehenden Werkstücks 12, unterhalb des Bodens 20 der Farbauftragkabine 10, wobei die Einlaßöffnung 34 vorzugsweise mittig unterhalb des Bodens 20 liegt.

Die Waschdüse 36 umfaßt ihrerseits zwei einander gegenüberliegende Führungswände 50 und 52, welche sich ebenfalls in Längsrichtung der Einlaßöffnung 34 erstrecken und dabei deren Längsseiten 54 bzw. 56 bilden.

Die Führungswand 50 schließt sich an den Ablaufboden 26 mit einem oberen, zur Längsseite 54 der Einlaßöffnung 34 führenden Einleitbereich 58 an. Auf den Einleitbereich 58 folgt nach der Längsseite 54 der Einlaßöffnung 34 eine innere Leitwand 60, wobei der Einleitbereich 58 in Form einer Rundung in die innere Leitwand 60 übergeht. Die Leitwand 60 erstreckt sich dabei bezüglich einer Mittelsenkrechten 62 durch die Einlaßöffnung 34 schräg von der Längsseite 56 und der Mittelsenkrechten 62 weg parallel zu einer ersten Richtung 64 bis zu einer unteren Leitwandkante 66. Zwischen der unteren Leitwandkante 66 und einer unteren Umlenkwand 68 ist die Führungswand 50 unterbrochen, sie setzt sich dann in Form der unteren Umlenkwand 68 fort, welche sich im wesentlichen vertikal unterhalb der unteren Leitwandkante 66 beginnend parallel zu einer zweiten Richtung 70 erstreckt, die zur Mittelsenkrechten 62 hin und ungefähr in einem Winkel zwischen 60° und 120° zur ersten Richtung 64 verläuft. Die Führungswand 50 verläuft unter Einschluß der unteren Umlenkwand 68 und einer sich daran anschließenden Düsenendwand ungefähr parallel zur zweiten Richtung 70 bis zur Düsenöffnung 40.

Die Führungswand 52 wird gebildet durch einen sich an den Ablaufboden 28 anschließenden und bis zur Längsseite 56 der Einlaßöffnung 34 verlaufenden Einleitbereich 80, welcher unmittelbar unterhalb der Einlaßöffnung 34 mit einer Unterkante 82 endet. Zwischen der Unterkante 82 und einer oberen Umlenkwand 84 ist die Führungswand 52 unterbrochen. Mit der oberen Umlenkwand 84 setzt sich die Führungswand 52 parallel zur ersten Richtung 64 bis zu einer Umbiegung 86 fort, in welcher die Führungswand 52 gerundet in eine Düsenendwand 88 übergeht, welche sich im wesentlichen parallel zur zweiten Richtung 70 bis zur Düsenöffnung 40 erstreckt.

Die Düsenöffnung 40 wird dabei gebildet durch zwei sich von den Düsenendwänden 72 und 88 erhebenden und aufeinanderzu gerichteten Düsenkantenleisten 90 und 92, welche den Querschnitt der Düsenöffnung 40 festlegen. Die Düsenöffnung 40 erstreckt sich dabei in gleicher Weise wie die Einlaßöffnung 34 in Längsrichtung der Farbauftragkabine 10.

Die zwischen der unteren Leitwandkante 66 und der unteren Umlenkfläche 68 liegende Unterbrechung der Führungswand 50 stellt eine Öffnung 100 einer Schallkammer 102 dar, die der Umbiegung 86 gegenüberliegend angeordnet ist. Die Schallkammer 102 wird dabei begrenzt durch eine Schallkammerseitenwand 104, welche sich im Abstand von der Öffnung 100 erstreckt und vorzugsweise von der unteren Umlenkwand 68 im Abstand von der Leitwand 60 nach oben bis unter den Einleitbereich 58 der Führungswand 50 verläuft. Ferner wird die Schallkammer 102 noch durch eine oberhalb der unteren Leitwandkante 66 zwischen der Seitenwand 104 und der inneren Leitwand 60 verlaufende obere Wand 106 begrenzt, welche im Abstand unterhalb des Einleitbereichs 58 der Führungswand 50 verläuft.

Ein von der oberen Wand 106, der inneren Leitwand 60 und dem Einleitbereich 58 der Führungswand sowie einer Fortsetzung der Seitenwand 104 umschlossene Kammer 108 bildet dabei eine Dämpfungskammer, welche über Öffnungen in der oberen Wand 106 mit der Schallkammer 102 verbunden ist und mit einem schalldämpfenden Material, beispielsweise Mineralwolle, gefüllt ist.

Beispielsweise ist dabei die obere Wand 106 durch ein Lochblech gebildet.

Ferner bildet die Unterbrechung der Führungswand 52 zwischen der Unterkante 82 und der oberen Umlenkfläche 84 ebenfalls eine Öffnung 110 einer zweiten Schallkammer 112, welche ebenfalls durch eine Seitenwand 114 abgeschlossen ist, die sich in Fortsetzung der oberen Umlenkwand 84 und im Abstand von der Unterkante 82 in Richtung des Einleitbereichs 80 erstreckt und durch eine obere Wand 116 abgeschlossen ist, die sich oberhalb der unteren Kante 82 des Einleitbereichs 80 zwischen dem Einleitbereich 80 der Führungswand 52 und der Seitenwand 114 erstreckt. Auch diese obere Wand 116 ist mit Öffnungen versehen, beispielsweise aus einem Lochblech ausgebildet, so daß ebenfalls eine Ankopplung eines hinter dieser oberen Wand 116 zwischen einer Fortsetzung der Seitenwand 114 und des Einleitbereichs 80 der Führungswand 52 liegende Dämpfungskammer 118 erfolgt, wobei die Dämpfungskammer 118 ebenfalls wieder mit einem schalldämpfenden Material, beispielsweise Glasfaser gefüllt ist.

Bei der erfindungsgemäßen Lösung strömt nun über die Zulaufrinne 30 zugeführte Waschflüssigkeit unter Bildung eines Waschflüssigkeitsfilms über den Ablaufboden 26 auf den Einleitbereich 58 und bildet ebenfalls auf diesem einen Waschflüssigkeitsfilm 120, der zur Längsseite 54 der Einlaßöffnung 34 hin verläuft, sich über diese hinaus erstreckt, die innere Leitwand 60 überdeckt und bis zur Leitwandkante 66 verläuft. Der Waschflüssigkeitsfilm 120 überdeckt dabei den Einleitbereich 58 sowie die innere Leitwand 60 über die gesamte Längserstreckung derselben im wesentlichen vollständig. Ausgehend von der unteren Leitwandkante 66 bildet der Waschflüssigkeitsfilm 120 einen die Öffnung 100 der Schallkammer 102 verschließenden Flüssigkeitsvorhang 122, welcher auf die Umlenkfläche 68 auftrifft, von der Umlenkfläche 68 umgelenkt wird.

Von der Umlenkfläche 68 erstreckt sich dann der Waschflüssigkeitsfilm 120 über dieselbe und breitet sich parallel zur zweiten Richtung 70 auch bis über die Düsenendwand 72 aus bis zur Düsenkantenleiste 90, im Bereich von welcher dann eine Verdüsung der Waschflüssigkeit und Austreten derselben durch die Düsenöffnung 40 erfolgt.

In ähnlicher Weise strömt der Zulaufrinne 32 zugeführte Waschflüssigkeit über den Ablaufboden 28 unter Bildung eines Waschflüssigkeitsfilms in Richtung der Einlaßöffnung 34, wobei sich der Waschflüssigkeitsfilm 124 über den Einleitbereich 80 der Führungswand 52 erstreckt bis zur Unterkante 82 desselben. Ausgehend hiervon bildet sich Waschflüssigkeitsvorhang 126, welcher die Öffnung 110 der Schallkammer 112 überdeckt und auf der oberen Umlenkfläche 84 der Führungswand 52 auftrifft. Von dieser oberen Umlenkfläche 84 aus setzt sich der Waschflüssigkeitsfilm 124 fort über die Umbiegung 86 hinweg und über die Düsenendwand 88 hinweg im wesentlichen bis zur Düsenkantenleiste 92, wobei im Bereich derselben eine Verdüsung der Waschflüssigkeit und ein Austreten der Waschflüssigkeit durch die Düsenöffnung 40 erfolgt.

Damit wird der ebenfalls zwischen den Waschflüssigkeitsfilmen 120 und 124 in die Düsenöffnung 34 eintretende Luftstrom 18 einerseits zwischen den beiden Führungswänden 50 und 52 und den die Führungswände 50 bzw. 52 bedeckenden Waschflüssigkeitsfilmen 120 bzw. 124 zunächst längs eines ersten Führungsabschnitts 130 parallel zur ersten Führungsrichtung 64 geführt, dann in einem Umlenkabschnitt 132 vor der ersten 64 in die zweite 70 umgelenkt und in einem zweiten Führungsabschnitt 134 zur Düsenöffnung 40 geführt, wobei die Waschflüssigkeitsfilme 120, 124 bewirken, daß ein Anhaften von Lackpartikeln und somit eine Krustenbildung auf den Führungswänden 50 und 52 unterbleibt. Ferner verschließen die Waschflüssigkeitsvorhänge 122 und 126 die Öffnungen 100 bzw. 110 der Schallkammern 102 bzw. 112, so daß in diese ebenfalls im wesentlichen keine Farbpartikel eindringen.

Der bei der Verdüsung der Waschflüssigkeit durch die Düsenkantenleisten 90 und 92 und die Düsenöffnung 40 entstehende Schall breitet sich bei der erfindungsgemäßen Lösung entgegengesetzt zur zweiten Richtung 70 und entgegengesetzt zur Strömungsrichtung des Luftstroms 18 zwischen den Düsenendwänden 72 und 88 aus und tritt durch den Waschflüssigkeitsvorhang 122 hindurch in den Schallraum 102 ein, wird im Schallraum 102 durch die Seitenwand 104 in Richtung der oberen Wand 106 umgelenkt und tritt durch die Öffnungen der oberen Wand 106 bereits gedämpft hindurch in die Dämpfungskammer 108, in welcher eine weitgehende Dämpfung des Schalls erfolgt.

Ferner wird geringfügig von der Seitenwand 104 der Schallkammer 102 noch entgegengesetzt zur ersten Richtung 64 und zum Luftstrom 18 sich in Richtung der Düsenöffnung 34 zwischen der Leitwand 60 und der Umlenkwand 84 ausbreitender Schall zu einem wesentlichen Teil durch den Waschflüssigkeitsvorhang 126 und somit die Öffnung 110 hindurch in die zweite Schallkammer 112 eintreten, dort auf die obere Wand 116 treffen und bereits teilweise gedämpft durch diese hindurch in die Dämpfungskammer 118 eintreten und dort eine weitgehende Dämpfung erfahren.

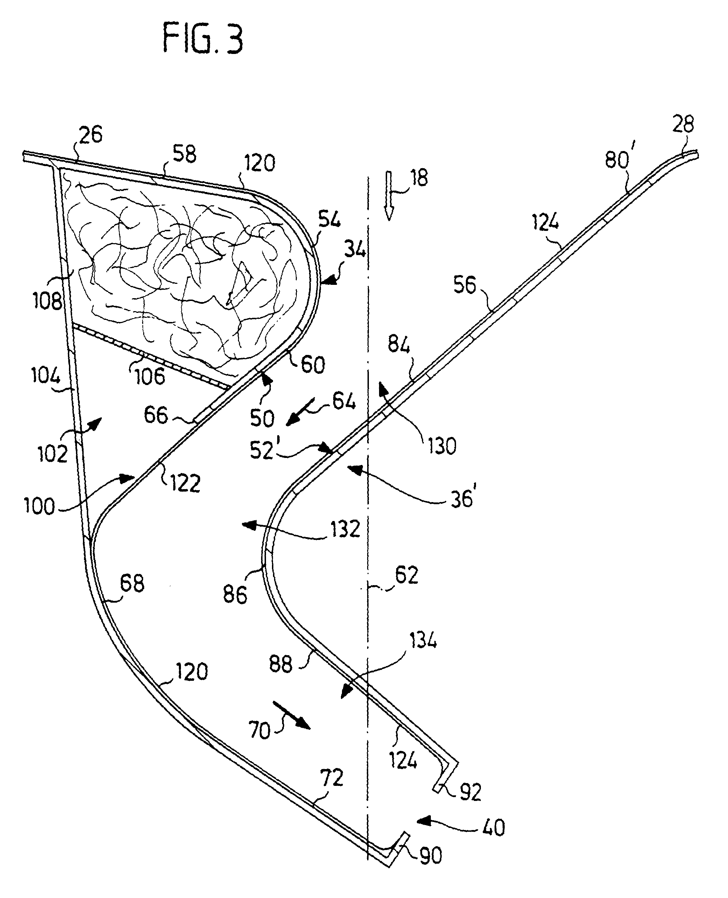

Bei einem vereinfachten Ausführungsbeispiel der erfindungsgemäßen Waschdüse 36', dargestellt in Fig. 3, sind die Schallkammer 112 und die Dämpfungskammer 118 entfallen und die obere Umlenkwand 84 setzt sich unterbrechungsfrei fort in den Einleitbereich 80', so daß der Waschflüssigkeitsfilm 124 sich über den Einleitbereich 80' erstreckt, und unterbrechungsfrei auf die obere Umlenkwand 84 fließt und von dieser in gleicher Weise wie beim ersten Ausführungsbeispiel sich über die Umbiegung 86 und die Düsenendwand 88 im wesentlichen bis zur Düsenkantenleiste 92 erstreckt.

Damit erstreckt sich die Führungswand 52' von dem Ablaufboden 28 bis zur Düsenkantenleiste 92 unterbrechungsfrei.

Die Führungswand 50 ist bei der in Fig. 3 dargestellten vereinfachten Variante in gleicher Weise ausgebildet wie beim ersten Ausführungsbeispiel, so daß zur Beschreibung derselben und zur Beschreibung der übrigen Funktion der Waschdüse 36' auf die Ausführungen zur vorstehend beschriebenen Lösung vollinhaltlich Bezug genommen wird.

## Patentansprüche

1. Wäscher, insbesondere für Farbauftrageinrichtungen, zum Auswaschen von festen und/oder flüssigen Stoffen aus einem Gasstrom mittels einer Waschflüssigkeit, umfassend eine von dem Gasstrom und der Waschflüssigkeit durchsetzte Waschdüse (36) mit einer Einlaßöffnung (34), durch welche der Gasstrom und die Waschflüssigkeit in die Waschdüse eintreten, mit einer ersten Umlenkwand (84), welche den Gasstrom und die Waschflüssigkeit stromabwärts der Einlaßöffnung schräg zur Vertikalen in eine erste Richtung umlenkt, mit einer zweiten Umlenkwand (68), welche den Gasstrom und die Waschflüssigkeit anschließend in eine zweite, im Winkel zur ersten Richtung verlaufende Richtung umlenkt, mit einer Düsenöffnung (40), durch welche der Gasstrom und die Waschflüssigkeit hindurchtreten, wobei die Waschflüssigkeit verdüst wird und sich ein vermischter Gas-/Waschflüssigkeitsstrom bildet, und mit einer stromaufwärts der Düsenöffnung in der Waschdüse angeordneten Schallkammer (102), welche eine der Düsenöffnung zugewandte Öffnung (100) aufweist,
**dadurch gekennzeichnet,**
**daß** einander gegenüberliegende Führungswände (50, 52) vorgesehen sind, zwischen welchen die Einlaßöffnung (34) der Waschdüse ausgebildet ist und welche von gegenüberliegenden Seiten in die Einlaßöffnung (34) eintretende Waschflüssigkeit im wesentlichen zerstäubungsfrei durch die Einlaßöffnung hindurch und auf die erste (84) und/oder zweite Umlenkwand (68) strömen lassen,
wobei die Führungswände (50, 52) der Waschdüse (36) so ausgebildet sind, daß sich von der Einlaßöffnung (34) bis zur Düsenöffnung (40) beiderseits des Gasstroms (18) ein sämtliche Führungswände (50, 52) im wesentlichen benetzender Waschflüssigkeitsfilm (122, 124) ausbildet, welcher auf der die Öffnung (100) aufweisenden Führungswand (50) bis zur Öffnung (100) hin verläuft, die Öffnung (100) der Schallkammer (102) mit einem Waschflüssigkeitsvorhang (122) überdeckt und sich im Anschluß daran auf der Führungswand (50) wieder fortsetzt.

2. Wäscher nach einem der voranstehenden Ansprüche, **dadurch gekennzeichnet, daß** die Führungswände (50, 52) so ausgebildet sind, daß sie einen auf die Einlaßöffnung (34) folgenden und sich parallel zur ersten Richtung (64) erstreckenden ersten Führungsabschnitt (130) bilden, welcher den Gasstrom (18) und die Waschflüssigkeit (120, 124) parallel zur ersten Richtung (64) führt.

3. Wäscher nach Anspruch 2, **dadurch gekennzeichnet, daß** sich an den ersten Führungsabschnitt (130) ein Umlenkabschnitt (132) anschließt, welcher den Gasstrom (18) und die Waschflüssigkeit (120, 124) zur zweiten Richtung hin umlenkt.

4. Wäscher nach Anspruch 3, **dadurch gekennzeichnet, daß** sich an den Umlenkabschnitt (132) ein von den Führungswänden (72, 88) gebildeter zweiter Führungsabschnitt (134) anschließt.

5. Wäscher nach einem der Ansprüche 3 oder 4, **dadurch gekennzeichnet, daß** der erste Führungsabschnitt (130) den Gasstrom (18) und die Waschflüssigkeit (120, 124) parallel zur ersten Richtung (64) so weit führt, daß der Umlenkabschnitt (132) bezogen auf eine Vertikale seitlich versetzt gegenüber der Einlaßöffnung (34) und unter dieser liegt.

6. Wäscher nach Anspruch 5, **dadurch gekennzeichnet, daß** der Umlenkabschnitt (132) um mindestens ungefähr eine halbe Breite der Einlaßöffnung (34) gegenüber dieser seitlich versetzt ist.

7. Wäscher nach einem der Ansprüche 3 bis 6, **dadurch gekennzeichnet, daß** zur Bildung des Umlenkabschnitts (132) die eine Führungswand (52) im Bereich des Umlenkabschnitts (132) einerseits eine Tangente parallel zur ersten Richtung (64) aufweist und sich dann davon ausgehend kontinuierlich wölbt bis sie eine Tangente parallel zur zweiten Richtung (70) aufweist.

8. Wäscher nach einem der Ansprüche 3 bis 7, **dadurch gekennzeichnet, daß** die Öffnung (100) der Schallkammer (102) auf einer Bogenaußenseite des Umlenkabschnitts (132) angeordnet ist.

9. Wäscher nach einem der Ansprüche 2 bis 8, **dadurch gekennzeichnet, daß** zwischen der Einlaßöffnung (34) und dem ersten Führungsabschnitt (130) eine Öffnung (110) einer weiteren Schallkammer (112) angeordnet ist.

10. Wäscher nach Anspruch 9, **dadurch gekennzeichnet, daß** die Öffnung (110) der weiteren Schallkammer (112) der Öffnung (100) der Schallkammer (102) gegenüberliegend angeordnet ist.

11. Wäscher nach Anspruch 9 oder 10, **dadurch gekennzeichnet, daß** die Führungswand (52) mit einem bis zu der Öffnung (110) der weiteren Schallkammer (112) reichenden Flüssigkeitsfilm (124) überdeckt ist, daß die Öffnung (110) durch einen Waschflüssigkeitsvorhang (126) überdeckt ist und daß sich im Anschluß an die Öffnung (110) der Waschflüssigkeitsfilm (124) auf der Führungswand (52) wieder fortsetzt.

12. Wäscher nach einem der voranstehenden Ansprüche, **dadurch gekennzeichnet, daß** die Schallkammer (102, 112) sich seitlich des Gasstroms (18) und der diesen seitlich einschließenden Waschflüssigkeit (120, 124) erstreckt.

13. Wäscher nach einem der voranstehenden Ansprüche, **dadurch gekennzeichnet, daß** jede Schallkammer (102, 112) so ausgebildet ist, daß sie einen unmittelbar sich an den von Waschflüssigkeit eingeschlossenen Gasstrom (18) anschließenden freien Raum aufweist.

14. Wäscher nach Anspruch 13, **dadurch gekennzeichnet, daß** sich an die Schallkammer (102, 112) eine Dämpfungskammer (108, 118) anschließt.

15. Wäscher nach Anspruch 14, **dadurch gekennzeichnet, daß** die Dämpfungskammer (108, 118) mit schalldämpfenden Elementen versehen ist.

16. Wäscher nach Anspruch 14 oder 15, **dadurch gekennzeichnet, daß** zwischen der Schallkammer (102, 112) und der Dämpfungskammer (108, 118) eine schalldämpfende aber schalldurchlässige Wand (106, 116) angeordnet ist.

17. Wäscher nach einem der voranstehenden Ansprüche, **dadurch gekennzeichnet, daß** sich die Schallkammer (102, 112) ausgehend von ihrer jeweiligen Öffnung (100, 110) in Richtung des Einleitbereichs (58, 80) der jeweiligen Führungswand (50, 52) erstreckt.

18. Wäscher nach Anspruch 17, **dadurch gekennzeichnet, daß** unter dem Einleitbereich (58, 80) der jeweiligen Führungswand (50, 52) die Dämpfungskammer (108, 118) angeordnet ist.

## Claims

1. Washer, in particular for paint coating devices, for washing out solid and/or liquid substances from a gas stream by means of a washing liquid, comprising a washing nozzle (36), through which the gas stream and the washing liquid pass, with an inlet (34), through which the gas stream and the washing liquid enter the washing nozzle, with a first deflection wall (84), which deflects the gas stream and the washing liquid downstream of the inlet on an incline to the vertical into a first direction, with a second deflection wall (68), which subsequently deflects the gas stream and the washing liquid into a second direction running at an angle to the first direction, with a nozzle opening (40), through which the gas stream and the washing liquid pass, wherein the washing liquid is atomised and a mixed gas/washing liquid stream is formed, and with a sound chamber (102) disposed in the washing nozzle upstream of the nozzle opening and having an opening (100) facing the nozzle opening, **characterised in that** opposing guide walls (50, 52) are provided, between which the inlet (34) of the washing nozzle is formed and which allow washing liquid entering the inlet (34) from opposite sides to flow essentially free from atomisation through the inlet and onto the first (84) and/or second deflection wall (68), the guide walls (50, 52) of the washing nozzle (36) being constructed so that a film of washing liquid (122, 124) essentially wetting all the guide walls (50, 52) is formed on both sides of the gas stream (18) from the inlet (34) to the nozzle opening (40), said film running on the guide wall (50) with the opening (100) as far as the opening (100), covering the opening (100) of the sound chamber (102) with a curtain of washing liquid (122) and after that continuing again on the guide wall (50).

2. Washer according to one of the preceding claims, **characterised in that** the guide walls (50, 52) are constructed so that they form a first guide section (130) following the inlet (34) and extending parallel to the first direction (64), which guides the gas stream (18) and the washing liquid (120, 124) parallel to the first direction (64).

3. Washer according to Claim 2, **characterised in that** a deflection section (132), which deflects the gas stream (18) and the washing liquid (120, 124) towards the second direction, adjoins the first guide section (130).

4. Washer according to Claim 3, **characterised in that** a second guide section (134) formed by the guide walls (72, 88) adjoins the deflection section (132).

5. Washer according to one of Claims 3 or 4, **characterised in that** the first guide section (130) guides the gas stream (18) and the washing liquid (120, 124) so far parallel to the first direction (64) that the deflection section (132) is laterally displaced with respect to a vertical in relation to the inlet (34) and lies below this.

6. Washer according to Claim 5, **characterised in that** the deflection section (132) is laterally displaced in relation to the inlet (34) by at least approximately half the width thereof.

7. Washer according to one of Claims 3 to 6, **characterised in that** in order to form the deflection section (132), one guide wall (52) has a tangent parallel to the first direction (64) on one side in the region of the deflection section (132) and from this then continuously arches until it has a tangent parallel to the second direction (70).

8. Washer according to one of Claims 3 to 7, **characterised in that** the opening (100) of the sound chamber (102) is arranged on an outer side of a curve of the deflection section (132).

9. Washer according to one of Claims 2 to 8, **characterised in that** an opening (110) of a further sound chamber (112) is disposed between the inlet (34) and the first guide section (130).

10. Washer according to Claim 9, **characterised in that** the opening (110) of the further sound chamber (112) is disposed to lie opposite the opening (100) of sound chamber (102).

11. Washer according to Claim 9 or 10, **characterised in that** the guide wall (52) is covered by a film of liquid (124) reaching as far as the opening (110) of the further sound chamber (112), that the opening (110) is covered by a curtain of washing liquid (126), and that after the opening (110) the film of washing liquid (124) continues again on the guide wall (52).

12. Washer according to one of the preceding claims, **characterised in that** the sound chamber (102, 112) extends laterally of the gas stream (18) and the washing liquid (120, 124) enclosing this laterally.

13. Washer according to one of the preceding claims, **characterised in that** each sound chamber (102, 112) is constructed so that it has a free space directly adjoining the gas stream (18) enclosed by washing liquid.

14. Washer according to Claim 13, **characterised in that** a damping chamber (108, 118) adjoins the sound chamber (102, 112).

15. Washer according to Claim 14, **characterised in that** the damping chamber (108, 118) is provided with sound-absorbing elements.

16. Washer according to Claim 14 or 15, **characterised in that** a sound-absorbing but sound-permeable wall (106, 116) is disposed between the sound chamber (102, 112) and the damping chamber (108, 118).

17. Washer according to one of the preceding claims, **characterised in that**, starting from its respective opening (100, 110), the sound chamber (102, 112) extends in the direction of the lead-in region (58, 80) of the respective guide wall (50, 52).

18. Washer according to Claim 17, **characterised in that** the damping chamber (108, 118) is disposed under the lead-in region (58, 80) of the respective guide wall (50, 52).

## Revendications

1. Laveur, notamment pour des dispositifs d'application de peinture, pour éliminer des matières solides et/ou liquides à partir d'un courant de gaz à l'aide d'un liquide de lavage, comprenant une buse de lavage (36) traversée par le courant de gaz et le liquide de lavage et comportant une ouverture d'admission (34) par laquelle le courant de gaz et le liquide de lavage pénètrent dans la buse de lavage, et une première paroi de déviation (84), qui dévie le courant de gaz et le liquide de lavage en aval de l'ouverture d'admission, obliquement par rapport à la verticale, dans une première direction, et une seconde paroi de déviation (68), qui dévie ensuite le courant de gaz et le liquide de lavage dans une seconde direction qui fait un angle par rapport à la première direction, et une ouverture de buse (40), que traversent le courant de gaz et le liquide de lavage, le liquide de lavage étant atomisé tandis qu'il se forme un courant mixte de gaz/liquide de lavage, et comportant une chambre acoustique (102) qui est disposée en amont de l'ouverture dans la buse de lavage et qui possède une ouverture (100) tournée vers l'ouverture de la buse,
**caractérisé en ce**
**qu'**il est prévu des parois de guidage (50, 52) situées en vis-à-vis, entre lesquelles est formée l'ouverture d'admission (34) de la buse de lavage et qui permettent au liquide de lavage, qui pénètre à partir de côtés opposés dans l'ouverture d'admission (34), de traverser essentiellement sans être pulvérisé l'ouverture d'admission et de circuler sur la première paroi de déviation (84) et/ou sur la seconde paroi de déviation (68), les parois de guidage (50, 52) de la buse de lavage (36) étant agencées de telle sorte que depuis l'ouverture d'admission (34) jusqu'à l'ouverture (40) de la buse des deux côtés du courant de gaz (18) il se forme un film de liquide de lavage (122, 124), qui mouille essentiellement toutes les parois de guidage (50, 52) et qui s'étend sur la paroi de guidage (50), qui comporte l'ouverture (100), jusqu'à l'ouverture (100), recouvre l'ouverture (100) de la chambre acoustique (102) par un rideau de liquide de lavage (122) et se prolonge à nouveau à la suite de cela sur la paroi de guidage (50).

2. Laveur selon la revendication précédente, **caractérisé en ce que** les parois de guidage (50, 52) sont agencées de telle sorte qu'elles forment une première section de guidage (130) qui succède à l'ouverture d'admission (34) et s'étend parallèlement à la première direction (64) et qui guide le courant de gaz (18) et le liquide de lavage (120, 124) parallèlement à la première direction (64).

3. Laveur selon la revendication 2, **caractérisé en ce qu'**à la première section de guidage (130) se raccorde une section de déviation (132), qui dévie le courant de gaz (18) et le liquide de lavage (120,124) dans la seconde direction.

4. Laveur selon la revendication 3, **caractérisé en ce qu'**une seconde section de guidage (134), qui est formée par les parois de guidage (72, 88), se raccorde à la section de déviation (132).

5. Laveur selon l'une des revendications 3 ou 4, **caractérisé en ce que** la première section de guidage (130) guide le courant de gaz (18) et le liquide de lavage (120, 124) parallèlement à la première direction (64) de sorte que la section de déviation (132) est décalée latéralement, d'une manière rapportée à la verticale, par rapport à l'ouverture d'admission (34) et au-dessous de cette dernière.

6. Laveur selon la revendication 5, **caractérisé en ce que** la section de déviation (132) est décalée latéralement au moins approximativement de la moitié de la largeur de l'ouverture d'admission (34) par rapport à cette ouverture.

7. Laveur selon l'une des revendications 3 à 6, **caractérisé en ce que** pour la formation de la section de déviation (132), une paroi de guidage (52) possède d'un côté dans la zone de la section de déviation (132), une tangente parallèle à la première direction (64) et est cintrée continûment, à partir de là, jusqu'à présenter une tangente parallèle à la seconde direction (70).

8. Laveur selon l'une des revendications 3 à 7, **caractérisé en ce que** l'ouverture (100) de la chambre acoustique (102) est disposée sur un côté extérieur de l'arc de la section de déviation (132).

9. Laveur selon l'une des revendications 2 à 8, **caractérisé en ce qu'**une ouverture (110) d'une autre chambre acoustique (112) est disposée entre l'ouverture d'admission (34) et la première section de guidage (130).

10. Laveur selon la revendication 9, **caractérisé en ce que** l'ouverture (110) de l'autre chambre acoustique (112) est disposée en vis-à-vis de l'ouverture (100) de la chambre acoustique (102).

11. Laveur selon la revendication 9 ou 10, **caractérisé en ce que** la paroi de guidage (52) est recouverte par un film de liquide (124) qui s'étend jusqu'à l'ouverture (110) de l'autre chambre acoustique (102), que l'ouverture (110) est recouverte par un rideau de liquide de lavage (126) et qu'à la suite de l'ouverture (110) le film de liquide de lavage (124) se prolonge à nouveau sur la paroi de guidage (52).

12. Laveur selon l'une des revendications précédentes, **caractérisé en ce que** les chambres acoustiques (102, 112) s'étendent latéralement par rapport au courant de gaz (18) et au liquide de lavage (120, 124), qui enveloppe latéralement ce dernier.

13. Laveur selon l'une des revendications précédentes, **caractérisé en ce que** chaque chambre acoustique (102, 112) est agencée de telle sorte qu'elle possède un espace libre qui se raccorde directement au courant de gaz (18) enveloppé par le liquide de lavage.

14. Laveur selon la revendication 13, **caractérisé en ce qu'**une chambre d'amortissement (108, 118) se raccorde aux chambres acoustiques (102, 112).

15. Laveur selon la revendication 14, **caractérisé en ce que** la chambre d'amortissement (108, 118) comporte des éléments d'atténuation acoustique.

16. Laveur selon la revendication 14 ou 15, **caractérisé en ce qu'**une paroi (106, 116) qui réalise une atténuation acoustique, mais transmet le son, est disposée entre la chambre acoustique (102, 112) et la chambre d'amortissement (108, 118).

17. Laveur selon l'une des revendications précédentes, **caractérisé en ce que** la chambre acoustique (102, 112) s'étend depuis son ouverture respective (100, 110) en direction de la zone d'entrée (58, 80) de la paroi respective de guidage (50, 52).

18. Laveur selon la revendication 17, **caractérisé en ce que** la chambre d'amortissement (108, 118) est disposée au-dessous de la zone d'entrée (58, 80) de la paroi respective de guidage (50, 52).
